# EUROPEAN PATENT APPLICATION

(11) **EP 4 800 958 A1**
(43) Date of publication of application: **02.09.2026**
(21) Application number: 24883793.2
(22) Date of filing: 09.04.2024
(51) Int. Cl.: H04L 5/00, H04L 1/00, H04W 24/10, H04B 7/06

(54) **CHANNEL STATE INFORMATION SENDING METHOD, CHANNEL STATE INFORMATION RECEIVING METHOD, COMMUNICATION APPARATUS, AND STORAGE MEDIUM**

(30) Priority: 31.10.2023 CN 202311439129
(71) Applicant: ZTE Corporation, Shenzhen, Guangdong 518057 (CN)
(72) Inventor: LIU, Wenfeng, Shenzhen, Guangdong 518057 (CN); LU, Zhaohua, Shenzhen, Guangdong 518057 (CN); XIAO, Huahua, Shenzhen, Guangdong 518057 (CN); GAO, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086749
(87) International publication number: WO 2025/091778

(57) **Abstract**

Provided in the embodiments of the present disclosure are a channel state information sending method, a channel state information receiving method, a communication apparatus, and a storage medium. The sending method comprises: obtaining channel state information on the basis of a measurement for a reference signal resource sent by a second node; and sending the channel state information to the second node, wherein the channel state information comprises a bitmap which is used for indicating index information of a target reference signal resource.

## Description

The present disclosure claims priority to Chinese Patent Application No. 202311439129.8 filed on October 31, 2023, the entire contents of which are incorporated herein by reference.

### TECHNICAL FIELD

The present disclosure relates to the field of communication technologies, and particularly to a channel state information transmitting method and a channel state information receiving method, a communication apparatus, and a storage medium.

### BACKGROUND

Currently, the multi-antenna technology has been widely used in various radio communication technologies, such as the long term evolution (LTE) mobile communication network of the 4th generation mobile networks (4G) and the new radio (NR) mobile communication network of the 5th generation mobile network (5G). In the future 6th generation mobile networks (6G), the multi-antenna technology is also widely concerned and researched.

### SUMMARY

In a first aspect, embodiments of the present disclosure provide a channel state information transmitting method, applied to a first node. The method includes:
obtaining channel state information based on measurement of reference signal resource(s) transmitted from a second node; and
transmitting the channel state information to the second node, where the channel state information includes a bitmap for indicating index information of target reference signal resource(s).

In a second aspect, embodiments of the present disclosure provide a channel state information receiving method, applied to a second node. The method includes:
transmitting reference signal resource(s) to a first node; and
receiving channel state information transmitted from the first node, where the channel state information includes a bitmap for indicating index information of target reference signal resource(s).

In a third aspect, embodiments of the present disclosure provide a communication apparatus, applied to a first node. The communication apparatus includes a processing module and a transmitting module.

The processing module is configured to obtain channel state information based on measurement of reference signal resource(s) transmitted from a second node.

The transmitting module is configured to transmitting the channel state information to the second node, where the channel state information includes a bitmap for indicating index information of target reference signal resource(s).

In a fourth aspect, embodiments of the present disclosure provide another communication apparatus, applied to a second node. The communication apparatus includes a transmitting module and a receiving module.

The transmitting module is configured to transmit reference signal resource(s) to a first node.

The receiving module is configured to receive channel state information transmitted from the first node, where the channel state information includes a bitmap for indicating index information of target reference signal resource(s).

In a fifth aspect, a communication apparatus is provided. The communication apparatus includes a processor and a memory. The memory has stored instructions executable by the processor. The processor, when executing the instructions, is configured to cause the communication apparatus to implement the method provided in any one of the first aspect or the second aspect above.

In a sixth aspect, a computer readable storage medium is provided. The computer readable storage medium stores computer instructions that, upon being run on a computer, cause the computer to perform the method provided in any one of the first aspect or the second aspect above.

In a seventh aspect, a computer program product including computer is provided. The computer instructions, upon being run on a computer, cause the computer to perform the method provided in any one of the first aspect or the second aspect above.

### BRIEF DESCRIPTION OF THE DRAWINGS

The accompanying drawings are used to provide a further understanding of the technical solutions of the present disclosure, and constitute a part of the specification, which is used to explain the technical solutions of the present disclosure together with the embodiments of the present disclosure, and do not constitute a limitation on the technical solutions of the present disclosure.
FIG. 1 is a schematic diagram of an architecture of a communication system provided in the embodiments of the present disclosure.
FIG. 2 is a flowchart of a channel state information transmitting method provided in the embodiments of the present disclosure.
FIG. 3 is a schematic diagram of reference signal resources provided in the embodiments of the present disclosure.
FIG. 4A is a schematic diagram of a bitmap provided in the embodiments of the present disclosure.
FIG. 4B is a schematic diagram of another bitmap provided in the embodiments of the present disclosure.
FIG. 5 is a schematic diagram of another reference signal resources provided in the embodiments of the present disclosure.
FIG. 6 is a schematic diagram of a timing relationship for measurement and reporting provided in the embodiments of the present disclosure.
FIG. 7 is a schematic diagram of a spatial relation assumption provided in the embodiments of the present disclosure.
FIG. 8 is a flowchart of a channel state information receiving method provided in the embodiments of the present disclosure.
FIG. 9 is a composition schematic diagram of a communication apparatus provided in the embodiments of the present disclosure.
FIG. 10 is a composition schematic diagram of another communication apparatus provided in the embodiments of the present disclosure.
FIG. 11 is a structural schematic diagram of a communication apparatus provided in the embodiments of the present disclosure.

### DETAILED DESCRIPTION

The technical solutions in the embodiments of the present disclosure would be described clearly and completely in conjunction with the accompanying drawings in the disclosure. It is apparent that the described embodiments are only a part of the embodiments of the present disclosure, rather than all of the embodiments of the present disclosure. Based on the embodiments of the disclosure, all other embodiments obtained by those of ordinary skill in the art without creative effort fall within the protection scope of the disclosure.

In the description of the present disclosure, unless otherwise specified, "/" represents "or", and for example, A/B may represent A or B. Herein, "and/or" refers to only an association relationship for describing associated objects and represents that three relationships may exist. For example, A and/or B may represent three cases: only A, both A and B, and only B. Additionally, "at least one" means one or more, and "multiple/plurality of" means two or more. Words, such as "first" and "second", etc., do not limit the quantity and execution order, and the words, such as "first" and "second", etc., also do not necessarily limit different items.

It should be noted that in the present disclosure, the words such as "exemplary/exemplarily" or "for example (e.g.)", etc., are used to present an example, illustration, or explanation. Any embodiment or design solution described with "exemplary/exemplarily" or "for example" in the present disclosure should not be construed as preferred or advantageous over other embodiments or design solutions. Rather, the usage of the words such as "exemplary/exemplarily" or "for example (e.g.)", etc., is intended to present relevant concepts in a specific manner.

In a millimeter-wave communication system, a large-scale antenna array is generally used to form shaped beams with relatively large gain, so as to compensate for transmission loss and ensure system coverage. In this case, the user equipment and the base station need to adjust their beams and achieve precise alignment during the initial access and data transmission processes, to ensure achieving maximum gain. The 3rd Generation Partnership Project (3GPP) organization has formulated a complete set of beam management procedures for adjusting the beam direction in the high frequency band and maintaining a suitable transceiver beam pair, including beam scanning, beam measurement, beam reporting, and beam indication, etc.

During the beam scanning, the base station can configure multiple reference signal resources for beam measurement for the terminal, including channel state information-reference symbol (CSI-RS) or synchronization signal and PBCH block (SSB). The reference signal resources are carried on different downlink transmission beams, respectively. The terminal can measure the reference signals and report the beam measurement result to the base station. The reported parameters of the beam measurement include a reference signal resource identity (SSB resource identifier/CSI-RS resource identifier) corresponding to one or more transmission beams selected by the terminal, a physical layer reference signal receiving power (RSRP), or a physical layer signal to interference plus noise ratio (SINR). In the artificial intelligence (AI)-based beam management method, the base station only needs to transmit reference signal resources in part of the beam space or at part time, and uses AI algorithms to predict the full beam space information and the optimal beam at all time. However, the reporting overhead of the terminal increases linearly with the increase of the number of reported beams. That is, when the reported beam data is large, it will lead to a large beam reporting overhead.

In view of this, the present disclosure provides a channel state information transmitting method, the method includes that: obtaining channel state information based on measurement of reference signal resource(s) transmitted from a second node; and transmitting the channel state information to the second node, where the channel state information includes a bitmap for indicating index information of target reference signal resource(s). In this way, the reporting overhead can be reduced.

The technical solution provided in the embodiments of the present disclosure can be applied to various mobile communication networks, for example, new radio (NR) mobile communication networks using the 5th generation mobile networks (5G), future mobile communication networks (including but not limited to various 6th generation mobile networks (6G)), or multi-communication convergence systems, or the like, which is not limited in the embodiments of the present disclosure.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). Also, it should be understood that, in this example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. When two communication nodes are in a device-to-device communication, both the first communication node and the second communication node may be base stations or terminals. The first communication node and the second communication node may be referred to as the first node and the second node for short, respectively.

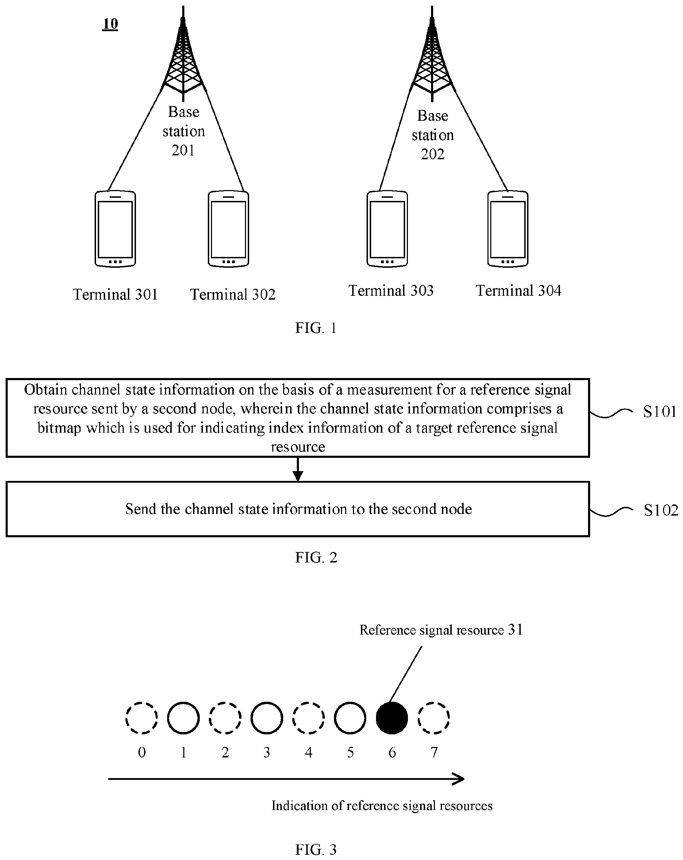

Exemplarily, taking a network side device as a base station and a receiving side device as a terminal as an example, FIG. 1 illustrates a schematic diagram of an architecture of a communication system provided in the embodiments of the present disclosure. As illustrated in FIG. 1, a communication system 10 includes a plurality of base stations (e.g., base station 201 and base station 202) and a plurality of terminals (e.g., terminal 301, terminal 302, terminal 303, and terminal 304). The plurality of base stations and the plurality of terminals may be in communication connection. That is, one base station may provide network services to terminals in one cell, and may further provide network services to terminals in a plurality of cells at the same time.

In some embodiments, a base station may be a base station or an evolved Node B (eNB or eNodeB) in Long Term Evolution (LTE) or Long Term Evolution Advanced (LTEA), a base station device in a 5G network, or a base station in a future communication system, etc. The base station may include various macro base stations, micro base stations, home base stations, wireless remote extensions, reconfigurable intelligent surfaces (RISs), routers, wireless fidelity (WIFI) devices, primary cells and secondary cells, and various other network-side devices.

In some embodiments, a terminal may be a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometime may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, or the like, which is not limited in the embodiments of the present disclosure.

In some embodiments, a higher layer signaling includes, but is not limited to a radio resource control (RRC) signaling, a media access control-control element (MAC CE) signaling, or other higher layer signalings higher than the physical layer. A physical layer signaling includes, but is not limited to: downlink control information and uplink control information. As an example, the physical layer signaling may be transmitted between the base station and the terminal on a physical downlink control channel (PDCCH) and on a physical uplink control channel (PUCCH).

In some embodiments, an indicator of a parameter may also be referred to as an index or an identifier (ID), and the concepts of indicator, identifier and index are equivalent. For example, a resource identifier of a wireless system may also be referred to as a resource indicator or a resource index. The resource indicator of the wireless system includes but is not limited to one of: indicators corresponding to a reference signal resource, a reference signal resource group, a reference signal resource configuration, a channel state information (CSI) report, a CSI report set, a terminal, a base station, a panel, a neural network, a sub-neural network, a neural network layer, a precoding matrix, a beam, a transmission manner, a transmitting manner, a receiving manner, a module, a model, a functional module, a function, etc. The base station may indicate an identifier of a resource or a group of resources to the terminal through various higher layer signalings or physical layer signalings. The terminal may also feed back an identifier of a resource or a group of resources to the base station through various higher layer signalings and/or physical layer signalings.

In some embodiments, in order to calculate channel state information or perform channel estimation, mobility management, positioning, etc., the base station or user needs to transmit a reference signal (RS). The reference signal includes, but is not limited to: CSI-RS, which includes zero-power CSI-RS (ZP CSI-RS) and non-zero-power CSI-RS (NZP CSI-RS); channel-state information-interference measurement (CSI-IM); sounding reference signal (SRS); SSB; physical broadcast channel (PBCH); and synchronization signals block/physical broadcast channel (SSB/PBCH). NZP CSI-RS may be used to measure a channel or interference, CSI-RS may also be used for tracking, called Tracking Reference Signal (TRS), CSI-IM is generally used to measure an interference, and SRS is used to measure uplink channel. In addition, a resource elements (RE) set included in a time instant-frequency resource for transmitting a reference signal is referred to as a reference signal resource, for example, a CSI-RS resource, an SRS resource, a CSI-IM resource, and an SSB resource. In the present disclosure, SSB includes a synchronization signal block and/or a physical broadcast channel.

In some embodiments, in order to save signaling overhead, multiple reference signal resources may be divided into multiple sets (such as CSI-RS resource set, CSI-IM resource set, SRS resource set). Each reference signal resource set includes at least one reference signal resource, and multiple reference signal resource sets may all come from the same reference signal resource setting (such as CSI-RS resource setting, SRS resource setting, where the CSI-RS resource setting may be merged with the CSI-IM resource setting and both are called CSI-RS resource setting) to configure parameter information.

In some embodiments, a beam includes a transmitting beam, a receiving beam, a pair of a receiving beam and a transmitting beam, a pair of a transmitting beam and a receiving beam. In some embodiments, a beam may be understood as a kind of resource, for example, a reference signal resource, a transmitting end spatial filter, a receiving end spatial filter, a spatial filter, a spatial receiving parameter, a transmitting end precoding, a receiving end precoding, an antenna port, an antenna weight vector , an antenna weight matrix, etc. A beam index may be replaced by a resource index (e.g., a reference signal resource index), because the beam may be bundled with some time instant-frequency code resources for transmission. A beam may also be a transmission (transmitting/receiving) manner; the transmission manner may include space division multiplexing, frequency domain/time instant domain diversity, beamforming, etc. In some embodiments, a beam pair includes a combination of a transmitting beam and a receiving beam.

In some embodiments, the beam is equivalent to a beam state, a quasi-co-location (QCL) state, a transmission configuration indicator (TCI) state, a spatial relation, spatial relation information, a reference signal (RS), a reference signal resource, a spatial filter, and precoding. In some embodiments, the transmitting beam is equivalent to a QCL state, a TCI state, a spatial relation, a spatial relation state, a uplink/downlink reference signal (such as a CSI-RS, a SSB, a DMRS (Demodulation Reference Signal), a SRS, a PRACH (Physical Random Access Channel)), transmitting spatial filter, and transmitting precoding. In some embodiments, the receiving beam is equivalent to a QCL state, a TCI state, a spatial relation, a spatial relation state, a spatial receiving parameter, a spatial filter, a receiving spatial filter, and receiving precoding. The spatial filter is also referred to as a spatial domain filter, which can be in either the base station side or the UE side. In some embodiments, the base station may perform quasi co-location (QCL) configuration for two reference signals, and inform a user end to describe a channel characteristic assumption. Parameters involved in the quasi co-location include at least: a Doppler spread, a Doppler shift, a delay spread, an average delay, an average gain and spatial parameter (Spatial receiving (Rx) parameter, or Spatial parameter). Here, the spatial parameter may include a spatial receiving parameter, angle information, spatial correlation of the receiving beam, an average delay, and correlation of time instant-frequency channel responses (including phase information). The angle information may include at least one of: angle of arrival (AOA), angle of departure (AOD), zenith angle of departure (ZOD), or zenith angle of arrival (ZOA). The spatial domain filtering may be at least one of: a DFT(discrete Fourier transform) vector, a precoding vector, a DFT matrix, a precoding matrix, or a vector formed by a linear combination of multiple DFTs, or a vector formed by a linear combination of multiple precoding vectors. In some embodiments, the concepts of phasor and vector are interchangeable.

In some examples, in order to better transmit data or signals, the base station or the terminal needs to acquire a measurement parameter. The measurement parameter may include channel state information or other parameters for characterizing the channel. Here, the channel state information may include at least one of: a CRI, a SSBRI, a L1 Reference Signal Received Power (L1-RSRP or RSRP), a differential RSRP, A L1 signal to interference noise ratio (L1-SINR or SINR), a differential L1-SINR, a reference signal received quality (RSRQ), a channel quality indicator (CQI), a precoding matrix indicator (PMI), a layer indicator (LI), a rank indicator (RI), or precoding information. The precoding information includes first type of precoding information, such as codebook-based precoding information. Here, the precoding matrix indicator is one type of the codebook-based precoding information. The precoding information also includes a non-codebook-based implementation, such as second type of precoding information, and precoding information obtained based on advanced technologies (e.g., artificial intelligence).

In some embodiments, the beam parameter information includes at least one of: the L1 reference signal received power corresponding to at least one beam, the L1-SINR corresponding to at least one beam, and the confidence level/probability (i.e., the probability that the beam has the maximum measured RSRP or the maximum measured SINR) corresponding to at least one beam. In some embodiments, the beam parameter information is a reference signal received quality corresponding to at least one beam. In some embodiments, the beam parameter information is a beam angle (such as at least one of AOA, ZOA, AOD, ZOD, or the like, which also be referred to as an azimuth angle of arrival, a vertical angle of arrival, an azimuth angle of departure, a vertical angle of departure, respectively) corresponding to at least one beam. In some embodiments, the beam parameter information is a transmitting beam index corresponding to at least one beam. In some embodiments, the beam parameter information is a receiving beam index corresponding to at least one beam. In some embodiments, the beam parameter information is a pair index of a transmitting beam and a receiving beam (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator corresponding to at least one beam. In some embodiments, the beam parameter information is a synchronization signal block resource indicator (SSBRI) or other reference signal resource indicators (such as SRSRI (sounding reference signal resource indicator)) corresponding to at least one beam. In some embodiments, the beam parameter information is a combination of at least two of the following beam parameter information corresponding to at least one beam: a RSRP, a RSRQ, a SINR, a beam angle, a transmitting beam index, a receiving beam index, a beam pair index, a CRI, a SSBRI, etc. In some embodiments, the beam parameter information is a linear value of one of a RSRP, a RSRQ, and a SINR. In some embodiments, the beam parameter information is a logarithmic value or a decibel value (DB) of one of a RSRP, a RSRQ, and a SINR.

In some embodiments, the beam parameter information may also be referred to as or be equivalent to beam quality information, or a channel measurement result, or a beam measurement result, or a measurement result, or a measurement parameter, or channel quality information. In some embodiments, the beam parameter information is a subset of the channel state information, that is, the beam parameter information is the channel state information, and the channel state information belongs to the measurement parameter. In some embodiments, the measurement parameter, the channel state information, and the beam parameter information all belong to a measurement result, or a processing result, or a generation result.

In some embodiments, in order to transmit channel state information at the physical layer, the terminal and the base station define a CSI report (or CSI report config), where the CSI report defines at least one of the following parameters: a time instant-frequency resource used for CSI feedback, a report quality included in the CSI, a time instant-domain type of the CSI feedback (report Config Type), a channel measurement resource, an interference measurement resource, or a measurement bandwidth. The CSI report may be transmitted on an uplink transmission resource, where the uplink transmission resource includes a physical uplink shared channel (PUSCH) and a PUCCH, and the CSI report also includes time instant domain characteristics, including a periodic CSI report (P-CSI), an aperiodic CSI report (AP-CSI), and a semi-persistent CSI report (SP-CSI).

In some embodiments, the base station configures NC CSI reports that need to be fed back to the base station to the terminal through a higher layer signaling and/or a physical layer signaling. Each CSI report has an identity/identifier (ID), called CSI report ID. The terminal can select MC CSI reports from the NC CSI reports according to its own computing or processing capabilities and the requirements of the base station. And according to an uplink feedback resource, at least one report among the MC CSI reports is fed back, where NC and MC are positive integers, and MC≤NC. In an example, MC CSI reports need to be fed back, but the feedback resources for at least two reports among the MC reports are conflicting. The feedback resources for the two reports are conflicting, which means that the transmission resources (such as PUCCH or PUSCH) used to feed back the two reports have at least one identical symbol and/or at least one identical subcarrier. In some embodiments, a feedback CSI may also be referred to as a transmission CSI or a transmitting CSI, for example, the channel state information is carried on an uplink transmission resource for feedback or transmission. The uplink transmission resource and a corresponding CSI are both indicated by a channel state information report. In some embodiments, feedback or transmission of a CSI report refers to feeding back the channel state information configured for the CSI report. In some embodiments, feedback or transmission of a CSI report refers to transmitting, via a transmission resource, the content to be transmitted configured for the CSI report.

In some embodiments, the Artificial Intelligence (AI) includes a device, a component, software, and a module with self-learning capabilities, such as Machine learning (ML), deep learning, reinforcement learning, transfer learning, deep reinforcement learning, meta-learning. In some embodiments, the artificial intelligence is implemented through an artificial intelligence network (or referred to as a neural network).The neural network includes multiple layers, each layer including at least one node. In an example, the neural network includes an input layer, an output layer, and at least one hidden layer. Each layer of the neural network uses a layer including but not limited to at least one of a fully-connected layer, a dense layer, a convolutional layer, a transposed convolutional layer, a direct connection layer, an activation function, a normalization layer, or a pooling layer, etc. In some embodiments, each layer of the neural network may include a sub-neural network, such as a residual network block (or also referred to as resnet block), a dense network (e.g., a densenet block), a recurrent neural network (RNN), etc. The artificial intelligence network may be implemented through a model, where the model may include a neural network model. The neural network model includes a neural network model structure and/or a neural network model parameter. The neural network model structure may be referred to as a model structure for short, and the neural network model parameter may be referred to as a network parameter or a model parameter for short. A model structure defines an architecture of the network, such as a number of layers of the neural network, a size of each layer, an activation function, a connection situation, a size of a convolution kernel and a convolution step, a convolution type (e.g., 1D (dimension) convolution, 2D convolution, 3D convolution, hollow convolution, transposed convolution, separable convolution, group convolution, extended convolution, etc.), and the network parameter is a weight value and/or biases and their values of each layer of a network in the neural network model. A model structure may correspond to multiple sets of values for different neural network model parameters to adapt to different scenarios. The neural network model parameters are obtained through online training or offline training. For example, by inputting at least one sample and label, the neural network model is trained to obtain the neural network model parameters.

In some embodiments, the model refers to a general term used to describe the processing methods, functions, features, or feature groups that the terminal can perform. In some embodiments, the model is equivalent to a function/functionality, a functional module, a functional entity, a processing method, an information processing manner, an implementation, a feature, a feature group, a configuration, a configuration combination, or a configuration set. In some embodiments, each model corresponds to a model indicator (model ID) or a functionality indicator or a model identity (model ID) or a functionality identity. In some embodiments, the model identity may also have one of the following other equivalent names or concepts: a model index, a first identity, a function identity, a model indicator, etc.

In some embodiments, the model refers to a data flow from an original input of a sample to an output target passing through multiple linear or nonlinear components. The model includes a neural network model, a non-artificial intelligence module for processing information or corresponding model thereof, and a functional component or function for mapping input information to output information (the mapping herein includes linear mapping and nonlinear mapping).

In some examples, the model includes a model structure and model parameters. For example, the model is a neural network model, and the neural network model includes a neural network model structure and neural network model parameters, which are respectively used to describe the structure of the neural network and the parameter values of the neural network. A neural network model structure may correspond to multiple neural network model parameters, that is, neural network model structures may be the same, but corresponding neural network model parameter values may be different.

The method provided in the present disclosure will be illustrated below in detail in combination with the accompanying drawings of the description.

As illustrated in FIG. 2, the embodiments of the present disclosure provide a channel state information transmitting method, the method is applied to a first node and the method includes the following operations S101 and S102.

At the operation S101, channel state information is obtained based on measurement of reference signal resource(s) transmitted from a second node, where the channel state information includes a bitmap for indicating index information of target reference signal resource(s).

The length of the bitmap can be represented as M, where a value of M is equal to the number of reference signal resource(s) contained in a reference signal resource set, and M is a positive integer. In addition, a character on an indicator bit of the bitmap can be used to indicate whether the reference signal resource corresponding to the indicator bit is reported. For example, if the character on the indicator bit is "0", it means that the reference signal resource corresponding to the indicator bit is not reported. Conversely, if the character on the indicator bit is "1", it means that the reference signal resource corresponding to the indicator bit is reported.

In some embodiments, the channel state information further includes at least one of: the number N of the target reference signal resource(s), where N is a positive integer; channel quality information corresponding to each target reference signal resource; or an identity of a reference signal resource with greatest channel quality information.

### The number N of the target reference signal resource(s):

For example, the first node can determine the reference signal resource(s) (i.e., the target reference signal resource(s)) that need to be reported (i.e., that need to be sent to the second node). The number of target reference signal resource(s) may also be identified as N, where N is a positive integer. In some embodiments, N may be determined by the first node, or may be determined by the first node.

In an example, the first node may also transmit a value of N to the second node. For example, the first node may determine the value of N by itself and transmit the determined value of N to the second node.

In another example, the first node does not transmit the value of N to the second node. For example, the second node may configure the value of N for the first node, so the first node does not need to transmit the value of N to the second node.

### Channel quality information corresponding to each target reference signal resource:

In some embodiments, the channel quality information includes at least one of the following: a reference signal received power (RSRP), a signal to interference plus noise ratio (SINR), a reference signal received quality (RSRQ), a channel quality indicator (CQI), a confidence parameter, or a probability parameter.

The confidence parameter mentioned above is a parameter value used to indicate that the beam corresponding to the confidence parameter is the optimal beam (for example, the beam is associated with the greatest beam quality information). The probability parameter is used to represent a probability value that the beam corresponding to the probability parameter is the optimal beam (for example, the beam is associated with the greatest beam quality information).

For example, the first node may also transmit or report channel quality information corresponding to each of the N target reference signal resource(s) to the second node.

### Identity of the reference signal resource with greatest channel quality information:

In some embodiments, the identity of the reference signal resource with greatest channel quality information is used to identify the reference signal resource with the greatest channel quality information from the reference signal resource set.

For example, the first node may indicate the identity of the reference signal resource with the greatest channel quality information through a reference signal resource index. The identity of the reference signal resource with the greatest channel quality information may also be understood as the strongest beam position indicator. The identity occupies a bit length of $\left⌈log2M\right⌉$, where ┌ ┐ represents the rounding up sign.

Alternatively, the identity of the reference signal resource with the greatest channel quality information is used to identify the reference signal resource with the greatest channel quality information from N target reference signal resource(s).

For example, the first node may directly indicate the target reference signal resource with the greatest beam quality information among the N target reference signal resource(s) transmitted to the second node. The bit length occupied by the identity of the reference signal resource with the greatest channel quality information is $\left⌈{log}_{2}N\right⌉$, where ┌ ┐ represents the rounding up sign.

Further, in the above embodiments, the first node may be a terminal, and the second node may be a base station.

It should be noted that when applying a differential manner for report, the first node may report the greatest channel quality information and differential values of other channel quality information relative to the greatest channel quality information. Therefore, it is necessary to indicate the reference signal resource with the greatest channel quality information. That is, the channel state information may include the identity of the reference signal resource with the greatest channel quality information.

For example, as illustrated in FIG. 3, the number M of reference signal resources included in the configured reference signal resource set for channel measurement is 8, corresponding to the identities 0-7 in FIG. 3, and the solid circle represents the reference information resources that need to be reported. Furthermore, the number N of reference signal resources that the first node needs to transmit to the second node is 4, and the reference signal resource with the greatest channel quality information among the N reference signal resources is reference signal resource 31. Therefore, the channel state information transmitted from the first node to the second node may include a bitmap '01010110' with a bit length of 8 bits, the identity '110' (i.e., the reference signal resource identity CRI is 6) or '11' (i.e., the 4th reference signal resource among the 4 reported reference signal resources corresponds to the strongest beam position) of the reference signal resource with the greatest channel quality information, and beam quality information RSRP corresponding to the 4 reported reference signal resources.

It should be noted that, under normal cases, after measuring the configured reference signal resource set, the first node needs to report a measurement result to the second node. The first node may report one or more reference signal resource identities to the second node, such as CSI-RS resource identifiers CRI and SSBRI, as well as the corresponding beam quality information (such as RSRP, SINR, etc.). The bit length of the reported measurement result is illustrated in Table 1:

**Table 1**

| Field | Bitwidth |
|---|---|
| CRI | $\left⌈{log}_{2}{K}_{s}^{CSI - RS}\right⌉$ |
| SSBRI | $\left⌈{log}_{2}{K}_{s}^{SSB}\right⌉$ |
| RSRP | 7 |
| Differential RSRP | 4 |

${K}_{s}^{CSI - RS}$ and ${K}_{s}^{SSB}$ respectively represent the number of resources in the configured reference signal resource set used for channel measurement. The configured number of reference signal resources to be reported is N, and the bit overhead for reporting the reference signal resource identity CRI is $N \left⌈{log}_{2}{K}_{s}^{CSI - RS}\right⌉$, or the bit overhead for reporting the reference signal resource identity SSBRI is $N \left⌈{log}_{2}{K}_{s}^{SSB}\right⌉$.

In addition, the first node may also apply a differential reporting manner to report beam quality information (such as RSRP and SINR) to the second node. Taking RSRP as an example, the maximum RSRP value among the multiple pieces of beam quality information that needs to be reported can be used as the reference RSRP, and the quantization result of the maximum RSRP value can be directly reported to the second node, for example, the quantization bit length is 7 bits. Therefore, for other RSRPs in the multiple beam quality information, the difference values (i.e., the quantized result of the differences between each of the other RSRPs and the maximum RSRP) based on the maximum RSRP can be reported, and the quantization bit length can be 4 bits. When using the differential reporting manner, the reference signal resource identity corresponding to the reference value (such as the maximum RSRP value mentioned above) is presented at first in the mapping order of the CSI field. Therefore, the reference signal resource reporting manner based on the above bitmap can reduce the reporting overhead of reference signal resource identities CRIs/SSBRIs.

In some embodiments, the first node may also transmit channel state information at multiple time instants to the second node in one reporting instance.

In some embodiments, when the first node transmits channel state information at multiple time instants to the second node in one reporting instance, the bitmap has at least the following possible implementations.

In one possible implementation, the channel state information includes one bitmap, which includes M indicator bits.

A value of M is equal to the number of reference signal resource(s) contained in the reference signal resource set, and M is a positive integer. Each indicator bit corresponds to one reference signal resource in the reference signal resource set, and each indicator bit is used to indicate whether the index information of the corresponding reference signal resource is reported.

Therefore, based on this bitmap, the first node can report beam parameter information at multiple measurement time instants in a single reporting instance.

In another possible implementation, the channel state information includes T bitmaps, each bitmap corresponding to one measurement time instant, where T is the number of measurement time instants.

Each bitmap includes M indicator bits, where a value of M is equal to the number of reference signal resource(s) contained in the reference signal resource set, and M is a positive integer. Furthermore, each indicator bit in the bitmap corresponds to one reference signal resource in the reference signal resource set, and each indicator bit in the bitmap is used to indicate whether the index information of the corresponding reference signal resource is reported.

In addition, each bitmap can be used to represent the reporting status of the reference signal resource(s) at the measurement time instant corresponding to the bitmap. Therefore, based on the above T bitmaps, the first node can report beam parameter information at T measurement time instants in a single reporting instance.

In yet another possible implementation, the channel state information includes M bitmaps, each bitmap corresponding to one reference signal resource in the reference signal resource set.

A value of M is equal to the number of reference signal resource(s) contained in the reference signal resource set, and M is a positive integer. Each bitmap includes T indicator bits, where T is the number of measurement time instants. Each indicator bit corresponds to one measurement time instant and is used to indicate whether the index information of the reference signal resource corresponding to the bitmap at the corresponding measurement time instant is reported.

In addition, each bitmap can be used to represent the reporting status of the same reference signal resource at different measurement time instants. Therefore, based on this bitmap, the first node can report beam parameter information at multiple measurement time instants in a single reporting instance.

In yet another possible implementation, the channel state information includes one bitmap, which includes M*T indicator bits.

A value of M is equal to the number of reference signal resource(s) contained in the reference signal resource set, M is a positive integer, and a value of T is the number of measurement time instants. Each indicator bit corresponds to one measurement time instant and to one reference signal resource in the reference signal resource set. The indicator bit is used to indicate whether the index information of the reference signal resource at the corresponding measurement time instant is reported.

In some embodiments, consecutive K indicator bits in the bitmap correspond to the same one measurement time instant. Alternatively, consecutive P indicator bits correspond to the same one reference signal resource. A value of K is determined based on M, and a value of P is determined based on T.

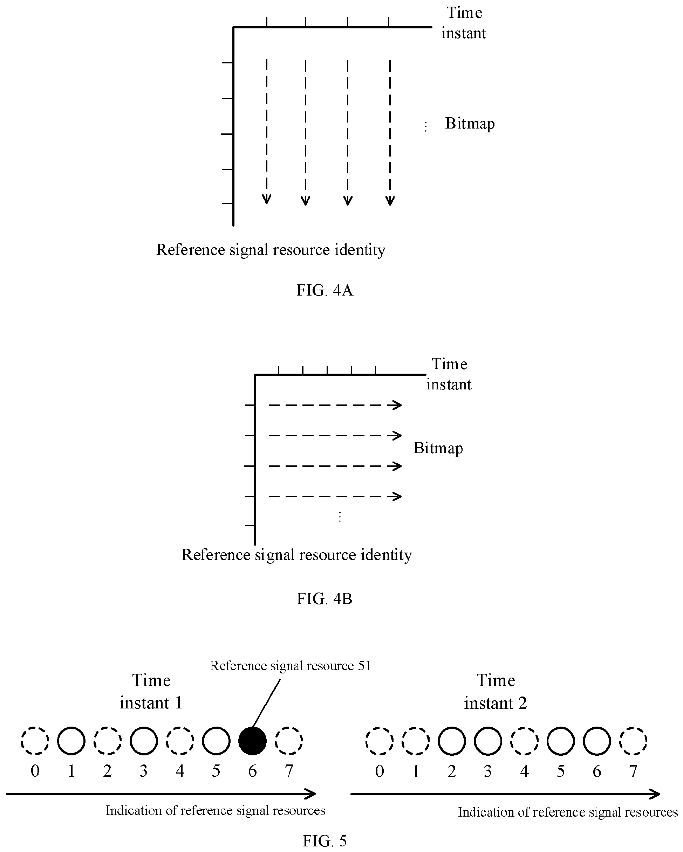

In an example, as illustrated in FIG. 4A, the first node can first traverse different reference signal resources at the same time according to a preset value order, and then traverse different time instants to determine the values of the bitmap.

In another example, as illustrated in FIG. 4B, the first node can first traverse different time instants of the same reference signal resource according to a preset value order, and then traverse different reference signal resources to determine the values of the bitmap.

In some embodiments, the channel state information further includes at least one of the following: the number of the target reference signal resource(s) transmitted at each measurement time instant; the number N of the target reference signal resource(s), where N is a positive integer; channel quality information corresponding to each target reference signal resource; or an identity of a reference signal resource with greatest channel quality information.

### The number of the target reference signal resource(s) transmitted at each measurement time instant:

For example, the number of target signal resource(s) transmitted at each measurement time instant can be represented as Nₜ, where Nₜ is a positive integer. t=1, 2, ... T, where T is the number of measurement time instants. In some embodiments, Nₜ may be determined by the first node or by the second node.

In an example, the first node may also transmit the value of Nₜ to the second node. For example, the first node may determine the value of Nₜ by itself and transmit the determined value of Nₜ to the second node.

In another example, the first node does not transmit the value of Nₜ to the second node. For example, the second node may configure the value of Nₜ for the first node, so the first node does not need to transmit the value of Nₜ to the second node.

Furthermore, in this embodiment, ${\sum }_{t = 1}^{T} {N}_{t} = N$. A detailed description of the number N of the target reference signal resource(s) and the channel quality information corresponding to each target reference signal resource can refer to the relevant content above, which will not be repeated here.

### Identity of the reference signal resource with greatest channel quality information:

In some embodiments, when applying a differential manner for reporting the channel quality parameter, the first node needs to additionally indicate a beam position (i.e., the identity of the reference signal resource with the greatest channel quality information) corresponding to the greatest beam quality information. For example, the identity of the reference signal resource with the greatest channel quality information is used to identify the reference signal resource with the greatest channel quality information from the reference signal resource set. Alternatively, the identity of the reference signal resource with the greatest channel quality information is used to identify the reference signal resource with the greatest channel quality information from N target reference signal resource(s).

In some embodiments, the channel state information further includes: an absolute value of channel quality information corresponding to a first target reference signal resource, and differential channel quality information values of channel quality information corresponding to other respective target reference signal resources relative to the channel quality information corresponding to the first target reference signal resource.

Taking RSRP as an example, in a reporting instance, only one reference RSRP is selected for reporting an absolute value, while other RSRPs are reported differentially. A bit length occupied by the strongest beam position indicator, i.e., the identity of the reference signal resource with the greatest channel quality information is $\left⌈{log}_{2}MT\right⌉$ or $\left⌈{log}_{2}N\right⌉$. Alternatively, the reference signal resource and the measurement time instant corresponding to the identity of the reference signal resource with the greatest channel quality information can be indicated, respectively, occupying a bit length of $\left⌈{log}_{2}M\right⌉ + \left⌈{log}_{2}T\right⌉$ or $\left⌈{log}_{2}Np\right⌉ + \left⌈{log}_{2}T\right⌉$, where Np represents the total number of reference signal resource(s) reported at the measurement time instant corresponding to the identity of the reference signal resource with the greatest channel quality information.

In some embodiments, the channel state information further includes: an absolute value of greatest channel quality information at each measurement time instant and one or more differential channel quality information values. For any measurement time instant, the one or more differential channel quality information values at the any measurement time instant include: differential channel quality information values obtained for channel quality information corresponding to other target reference signal resources transmitted at the any measurement time instant relative to the greatest channel quality information at the any measurement time instant, except for the target reference signal resource corresponding to the greatest channel quality information at the any measurement time instant.

Taking RSRP as an example, at each measurement time instant in a reporting instance, the greatest RSRP is selected to reporting an absolute value, and other RSRPs at the same measurement time instant are reported differentially with reference to the greatest RSRP. In this case, there are a total of T strongest beam positions, and the bit length occupied by each identity of the reference signal resource with the greatest channel quality information is $\left⌈{log}_{2}M\right⌉$ or $\left⌈{log}_{2}Nt\right⌉$, t=1,2,... T.

For example, as illustrated in FIG. 5, the number M of reference signal resources in the configured reference signal resource set for channel measurement is 8, the measurement time instants T are 2, the total number N of reported reference signal resources is 8, and the solid circle represents the reference information resources that need to be reported. The number of reference signal resources reported at each measurement time instant is: N1=N2=4, and the reference signal resource with the greatest channel quality information is reference signal resource 51. The contents that the first node needs to report to the second node includes: a bitmap '01010110 00110110' with a bit length of 16 bits, the identity '0110' (i.e., at the first time instant and the reference signal resource identity CRI is 6), or '011' (i.e., the fourth reference signal resource among the eight reported reference signal resources) of the reference signal resource with the greatest channel quality information, and the beam quality information RSRP corresponding to the reported eight reference signal resources.

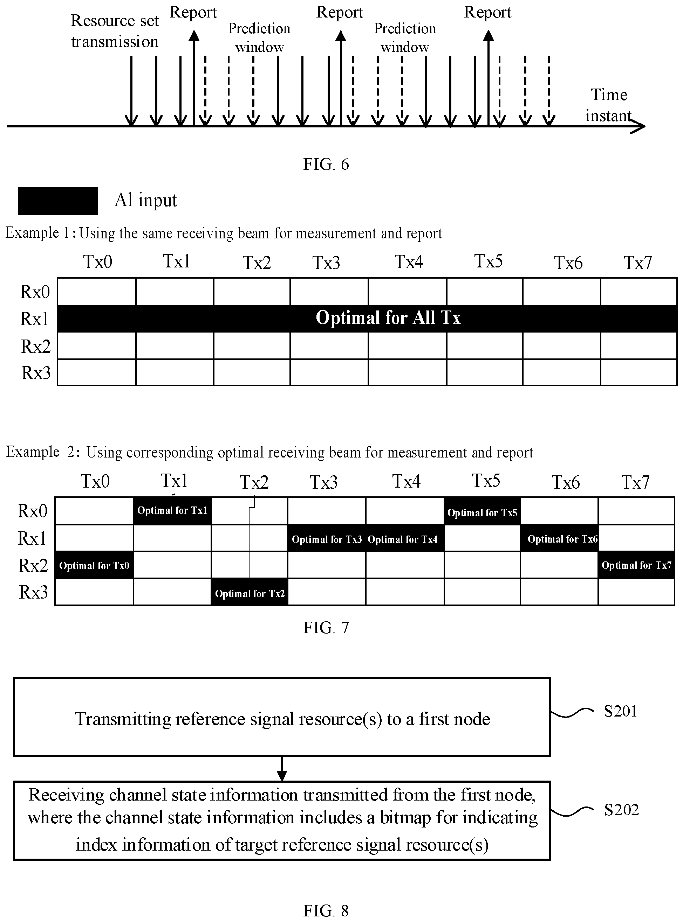

It should be noted that in the AI-based beam management method, the applied beam prediction model can predict the beam measurement results at multiple future time instants. Compared with the traditional beam scanning method, this can reduce the overhead of reference signal resources and the measurement power consumption. For example, for a beam prediction model deployed on the first node side, the first node may directly predict the beam parameter information of one or more future time instants based on the measurement results of one or more historical time instants. The reported number of future time instants may be determined based on a length of a prediction window, as illustrated in FIG. 6, the length of the prediction window can be 3. Alternatively, for a beam prediction model deployed on the second node side, the first node may transmit measurement results of one or more historical time instants to the second node in a reporting instance. The reported number of historical time instants may be determined based on a length of a preset measurement window. Thus, the beam prediction model deployed on the second node side may predict beam parameter information for one or more future time instants based on the measurement results transmitted from the first node. However, in current, it is generally possible to support the first node to report a measurement result at one time instant or an average measurement result obtained by averaging the measurement results at multiple historical time instants.

Therefore, based on the above bitmap reporting method, the first node can report beam parameter information at multiple time instants in a single reporting instance. For example, reference signal resource identities and/or beam quality information at one or more historical time instants can be reported without averaging the beam quality information at the multiple time instants. Alternatively, reference signal resource identities and/or beam quality information at one or more future time instants can be reported without averaging the beam quality information at the multiple time instants.

At the operation S102, the channel status information is transmitted to the second node.

In some embodiments, indication information transmitted from the second node is received and a target transmission manner is determined based on the indication information.

The indication information is used to determine the target transmission manner from multiple transmission manners for the channel state information. In some embodiments, the multiple reporting manners include at least a bitmap-based reporting manner and a non-bitmap-based reporting method.

For example, the number N of target reference signal resource(s) is configured by the second node for the first node. If there are R reporting manners, the second node may select one of the R reporting manners and indicate the one reporting manner to the first node based on a capability or scheduling of the first node, that is, the second node transmits the above-mentioned indication information to the first node.

In some embodiments, the first node may further determine the transmission overhead corresponding to each transmission manner in the multiple transmission manners for the channel state information. Then, a transmission manner with the lowest transmission overhead is selected from the multiple transmission manners for the channel state information as the target transmission manner, and the identity of the target transmission manner is transmitted to the second node.

For example, the number N of the target reference signal resource(s) is determined autonomously by the first node. When the first node reports the channel state information to the second node, the first node may only report beam(s) whose beam quality information (such as RSRP/SINR) is greater than a certain preset threshold. In this case, the value of N may vary at different time instants. Therefore, in a case where there are R reporting manners, the first node may select one of the R reporting manners and indicate the identity (such as index r) of the selected reporting manner to the second node.

In addition, the target transmission manner selected by the first node may be the transmission manner with the lowest transmission overhead among the multiple transmission manners. The bit overhead for each reporting manner to report the reference signal resource identity CRI/SSBRI is f₁(M, N), f₂(M, N), ... f_{R}(M, N), and the overhead of the target transmission manner satisfies that: fᵣ(M, N)=min{f₁(M, N), f₂(M, N),... f_{R}(M, N)}.

In some embodiments, the multiple reporting manners include at least a bitmap-based reporting manner and a non-bitmap-based reporting method.

In an example, in a case where a condition 1 is met, such as in a case where $N \left⌈{log}_{2}M\right⌉ > M + \left⌈{log}_{2}N\right⌉$ , the first node can select a bitmap-based reporting method.

In another example, in a case where a condition 2 is met, such as in a case where $N \left⌈{log}_{2}M\right⌉ ⩽ M + \left⌈{log}_{2}N\right⌉$ , the first node can select a reporting method based on CRI/SSBRI.

It should be noted that, in general, the bit overhead for reporting the reference signal resource identity CRI/SSBRI in the non-bitmap-based reporting manner is $N \left⌈{log}_{2}M\right⌉$, where M represents the number of reference signal resource(s) contained in the configured reference signal resource set, and N represents the number of reported reference signal resource(s). In the bitmap-based reporting manner, the minimum bit overhead required to report the bitmap and the identity of the reference signal resource with the greatest channel quality information can be $M + \left⌈{log}_{2}N\right⌉$. It is evident that different values of M and N, as well as the capabilities of the first node, will affect the required reporting overhead. Therefore, the target transmission manner can be flexibly selected from multiple transmission manners for the channel state information to report the channel state information, thereby further reducing the reporting overhead of the channel state information.

In some embodiments, the first node may further receive first information transmitted from the second node.

The first information is used for indicating a configuration parameter corresponding to the reference signal resource set.

In some embodiments, the above configuration parameter includes at least one of the following: a Transmission Configuration Indicator (TCI) status, Quasi-Co-Location (QCL) information, a power control parameter, a scrambling identity, a Partial Bandwidth (BWP) identity, or a resource type.

In an example, the second node may configure resource set-level TCI state or QCL information for the first node, including a QCL type A relationship, a QCL type B relationship, a QCL type C relationship, or a QCL type D relationship. That is, in the same one reference signal resource set, only one TCI state or QCL information is as an indicator, and all reference signal resources in the resource set have the same TCI state or the same QCL information. For example, the QCL type D relationship indicates the receiving beam when the first node performs the measurement, so that the measurement as illustrated in Example 1 of FIG. 7 can be implemented based on the resource set-level TCI state or QCL information.

It should be noted that in this embodiment, the resource set-level TCI state or QCL information can be configured for the first node. Compared to the scenario where the TCI state or QCL information (including a QCL source signal and a QCL type) of each reference signal resource in the configured reference signal resource set is carried in the RRC/MAC CE/DCI signaling during the configuration, activation, or triggering of a reference signal resource set under normal cases, the signaling overhead can be reduced.

In some embodiments, the first node may further receive second information transmitted from the second node.

The second information is used for configuring the first node to report channel quality information obtained by measurement under the same spatial relation or the same spatial reception parameter.

For example, for the measured reference signal resource set, the second node can indicate the first node to report the beam quality information obtained by measurement from the same receiving beam to the second node, which can implement the reporting in Example 1 of FIG. 7, where the beam quality information obtained by measurement from the same receiving beam is used for the configured reference signal resource set for channel measurement.

In some embodiments, the first may further receive third information transmitted from the second node.

The third information is used for configuring the first node to report channel quality information obtained by measurement under the same spatial relation or the same spatial reception parameter, and the spatial relation or the spatial reception parameter corresponds to greatest channel quality information in a measurement result.

For example, for the measured reference signal resource set, the second node can indicate the first node to report the beam quality information obtained by measurement from the same receiving beam to the second node, and the receiving beam corresponds to the greatest beam quality information among the measurement results of all transceiver beam pairs.

In some embodiments, the first may further receive fourth information transmitted from the second node.

The fourth information is used for indicating the first node to report greatest channel quality information corresponding to each reference signal resource.

For example, for the measured reference signal resource set, the second node can indicate the first node to report the greatest beam quality information corresponding to each reference signal resource to the second node. That is, after using multiple receiving beams to measure the same reference signal resource, the first node can report the greatest beam quality information among them, thereby realizing the reporting in Example 2 of FIG. 7. For each reference signal resource in the reference signal resource set, the corresponding optimal receiving beam (i.e., the one with the greatest beam quality information) is used for measurement and reporting.

In some embodiments, the first node may further receive fifth information transmitted from the second node, where the fifth information is used for indicating the first node to report channel quality information once for the same reference signal resource.

It should be noted that in this embodiment, resource set-level indication information can be configured to reduce the signaling overhead. In this case, in the reporting configuration, the receiving beam assumption used by the first node when reporting beam parameter information is indicated, thereby achieving receiving beam consistency between model training and inferencing.

Based on the technical solution provided in the present disclosure, when there are a large number of beams that need to be reported, a bitmap-based measurement indication and reporting manner can be used for reporting. In this way, the method can use a bitmap to indicate the beams that need to be reported without reporting all beam information, thereby reducing the overhead of the channel information reporting transmission.

In some embodiments, the embodiments of the present disclosure provide a channel state information receiving method, and the method is applied to a second node. As illustrated in FIG. 8, the method includes the following operations S201 and S202.

At the operation S201, reference signal resource(s) is transmitted to a first node.

At the operation S202, channel state information transmitted from the first node is received, where the channel state information includes a bitmap for indicating index information of target reference signal resource(s).

In some embodiments, the channel state information includes a bitmap for indicating index information of target reference signal resource(s).

The length of the bitmap can be represented as M, where a value of M is equal to the number of reference signal resource(s) contained in a reference signal resource set, and M is a positive integer. In addition, a character on an indicator bit of the bitmap can be used to indicate whether the reference signal resource corresponding to the indicator bit is reported. For example, if the character on the indicator bit is "0", it means that the reference signal resource corresponding to the indicator bit is not reported. Conversely, if the character on the indicator bit is "1", it means that the reference signal resource corresponding to the indicator bit is reported.

In some embodiments, the channel state information further includes at least one of: the number N of the target reference signal resource(s), where N is a positive integer; channel quality information corresponding to each target reference signal resource; or an identity of a reference signal resource with greatest channel quality information.

In some embodiments, the identity of the reference signal resource with greatest channel quality information is used to identify the reference signal resource with the greatest channel quality information from the reference signal resource set. Alternatively, the identity of the reference signal resource with the greatest channel quality information is used to identify the reference signal resource with the greatest channel quality information from N target reference signal resource(s).

In some embodiments, the channel quality information includes at least one of the following: a reference signal received power (RSRP), a signal to interference plus noise ratio (SINR), a reference signal received quality (RSRQ), a channel quality indicator (CQI), a confidence parameter, or a probability parameter.

In some embodiments, the second node may further receive channel state information transmitted from the first node at multiple time instants in a single reporting instance.

In a possible implementation, the channel state information includes one bitmap, the bitmap includes M indicator bit(s), a value of M is equal to a number of reference signal resource(s) contained in a reference signal resource set, and M is a positive integer. Each indicator bit corresponds to one reference signal resource in the reference signal resource set, and the each indicator bit is used to indicate whether index information of the corresponding one reference signal resource is reported.

In another possible implementation, the channel state information includes M bitmaps, each bitmap corresponds to one reference signal resource in the reference signal resource set, a value of M is equal to a number of reference signal resources contained in the reference signal resource set, and M is a positive integer. The each bitmap includes T indicator bits, a value of T is a number of measurement time instants, each indicator bit corresponds to one measurement time instant, and the each indicator bit is used to indicate whether index information of the reference signal resource corresponding to the bitmap at the corresponding one measurement time instant is reported.

In yet another possible implementation, the channel state information includes one bitmap, the bitmap includes M*T indicator bits, a value of M is equal to a number of reference signal resource(s) contained in a reference signal resource set, M is a positive integer, and a value of T is a number of measurement time instants. Each indicator bit corresponds to one measurement time instant and to one reference signal resource in the reference signal resource set. The each indicator bit is used to indicate whether index information of a reference signal resource at the corresponding one measurement time instant is reported.

In yet another possible implementation, the channel state information includes one bitmap, the bitmap includes M*T indicator bits, a value of M is equal to a number of reference signal resource(s) contained in a reference signal resource set, M is a positive integer, and a value of T is a number of measurement time instants. Each indicator bit corresponds to one measurement time instant and to one reference signal resource in the reference signal resource set. The each indicator bit is used to indicate whether index information of a reference signal resource at the corresponding one measurement time instant is reported.

In some embodiments, consecutive K indicator bits in the bitmap correspond to the same one measurement time instant; or consecutive P indicator bits correspond to the same one reference signal resource; a value of K is determined based on M, and a value of P is determined based on T.

In some embodiments, the channel state information further includes at least one of: the number of the target reference signal resource(s) transmitted at each measurement time instant; the number N of the target reference signal resource(s); channel quality information corresponding to each target reference signal resource; or an identity of a reference signal resource with greatest channel quality information.

In some embodiments, the channel state information further includes: an absolute value of channel quality information corresponding to a first target reference signal resource, and differential channel quality information values of channel quality information corresponding to other respective target reference signal resources relative to the channel quality information corresponding to the first target reference signal resource.

In some embodiments, the channel state information further includes: an absolute value of greatest channel quality information at each measurement time instant and one or more differential channel quality information values. For any measurement time instant, the one or more differential channel quality information values at the measurement time instant include: differential channel quality information values obtained for channel quality information corresponding to other target reference signal resources transmitted at the measurement time instant relative to the greatest channel quality information at the measurement time instant, except for the target reference signal resource corresponding to the greatest channel quality information at the measurement time instant.

In some embodiments, the second node may further transmit indication information to the first node, where the indication information is used for determining a target transmission manner from a plurality of transmission manners for the channel state information.

In some embodiments, the second node may further receive an identity of the target transmission manner transmitted from the first node, where the target transmission manner is one transmission manner in a plurality of transmission manners for the channel state information.

In some embodiments, the plurality of transmission manners at least includes a bitmap-based transmission manner and a non-bitmap-based transmission manner.

In some embodiments, the second node may further transmit first information to the first node, where the first information is used for configuring a configuration parameter corresponding to the reference signal resource set, and the configuration parameter includes at least one of: a Transmission Configuration Indicator (TCI) status, Quasi-Co-Location (QCL) information, a power control parameter, a scrambling identity, a Partial Bandwidth (BWP) identity, or a resource type.

In some embodiments, the second node may further transmit second information to the first node, where the second information is used for configuring the first node to report channel quality information obtained by measurement under the same spatial relation or the same spatial reception parameter.

In some embodiments, the second node may further transmit third information to the first node, where the third information is used for configuring the first node to report channel quality information obtained by measurement under the same spatial relation or the same spatial reception parameter, and the spatial relation or the spatial reception parameter corresponds to greatest channel quality information in a measurement result.

In some embodiments, the second node may further transmit fourth information to the first node, where the fourth information is used for indicating the first node to report greatest channel quality information corresponding to each reference signal resource.

In some embodiments, the second node may further transmit fifth information to the first node, where the fifth information is used for indicating the first node to report channel quality information once for a same reference signal resource.

Based on the technical solution provided in the present disclosure, when there are a large number of beams that need to be reported, a bitmap-based measurement indication and reporting manner can be used for reporting, so as to effectively indicate the beams that need to be reported. In this way, the overhead of transmitting the channel status information report can be further reduced.

The foregoing mainly introduces the solutions provided by the present disclosure from the perspective of interaction between various nodes. It can be understood that, in order to achieve the above-mentioned functions, the various nodes include corresponding hardware structure(s) and/or software module(s) for executing respective function(s). Those skilled in the art should easily realize that the present disclosure can be implemented in the form of hardware or a combination of hardware and computer software in combination with algorithms and operations described in the embodiments disclosed in the present disclosure. Whether a certain function is performed by hardware or computer software-driven hardware depends on the specific application and design constraints of the technical solutions. Professional technicians may use different methods to implement the described functions for each specific application, but such an implementation should not be considered beyond the scope of the present disclosure.

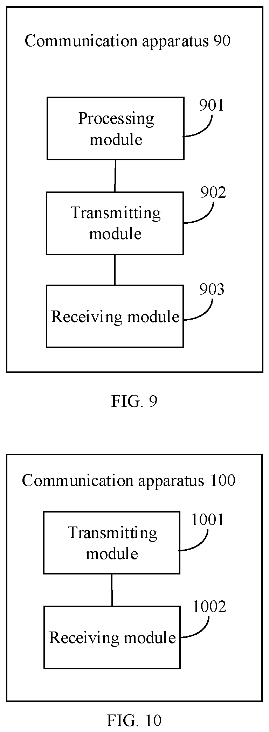

FIG. 9 is a composition schematic diagram of a communication apparatus provided in the embodiments of the present disclosure, which is applied to the first node. As illustrated in FIG. 9, the communication apparatus 90 includes a processing module 901, a transmitting module 902 and a receiving module 903.

In some embodiments, the processing module 901 is configured to obtain channel state information based on measurement of reference signal resource(s) transmitted from a second node. The transmitting module 902 is configured to transmit the channel state information to the second node. The channel state information includes a bitmap for indicating index information of target reference signal resource(s).

In some embodiments, the channel state information includes one bitmap, the bitmap includes M indicator bit(s), a value of M is equal to a number of reference signal resource(s) contained in a reference signal resource set, and M is a positive integer. Each indicator bit corresponds to one reference signal resource in the reference signal resource set, and the each indicator bit is used to indicate whether index information of the corresponding one reference signal resource is reported.

In some embodiments, the channel state information includes T bitmaps, each bitmap in the T bitmaps corresponds to one measurement time instant, and a value of T is the number of measurement time instants. The each bitmap includes M indicator bit(s), a value of M is equal to the number of reference signal resource(s) contained in a reference signal resource set, and M is a positive integer. Each indicator bit in the bitmap corresponds to one reference signal resource in the reference signal resource set, and the each indicator bit in the bitmap is used to indicate whether index information of the corresponding one reference signal resource is reported.

In some embodiments, the channel state information includes M bitmaps, each bitmap corresponds to one reference signal resource in the reference signal resource set, a value of M is equal to a number of reference signal resources contained in the reference signal resource set, and M is a positive integer. The each bitmap includes T indicator bits, a value of T is a number of measurement time instants, each indicator bit corresponds to one measurement time instant, and the each indicator bit is used to indicate whether index information of the reference signal resource corresponding to the bitmap at the corresponding one measurement time instant is reported.

In some embodiments, the channel state information includes one bitmap, the bitmap includes M*T indicator bits, a value of M is equal to a number of reference signal resource(s) contained in a reference signal resource set, M is a positive integer, and a value of T is a number of measurement time instants. Each indicator bit corresponds to one measurement time instant and to one reference signal resource in the reference signal resource set. The each indicator bit is used to indicate whether index information of a reference signal resource at the corresponding one measurement time instant is reported.

In some embodiments, consecutive K indicator bits in the bitmap correspond to the same one measurement time instant; or consecutive P indicator bits correspond to the same one reference signal resource; a value of K is determined based on M, and a value of P is determined based on T.

In some embodiments, the channel state information further includes at least one of: the number of the target reference signal resource(s) transmitted at each measurement time instant; the number N of the target reference signal resource(s); channel quality information corresponding to each target reference signal resource; or an identity of a reference signal resource with greatest channel quality information.

In some embodiments, the identity of the reference signal resource with greatest channel quality information is used to identify the reference signal resource with the greatest channel quality information from the reference signal resource set. Alternatively, the identity of the reference signal resource with the greatest channel quality information is used to identify the reference signal resource with the greatest channel quality information from N target reference signal resource(s).

In some embodiments, the channel quality information includes at least one of the following: a reference signal received power (RSRP), a signal to interference plus noise ratio (SINR), a reference signal received quality (RSRQ), a channel quality indicator (CQI), a confidence parameter, or a probability parameter.

In some embodiments, the channel state information further includes: an absolute value of channel quality information corresponding to a first target reference signal resource, and differential channel quality information values of channel quality information corresponding to other respective target reference signal resources relative to the channel quality information corresponding to the first target reference signal resource.

In some embodiments, the channel state information further includes: an absolute value of greatest channel quality information at each measurement time instant and one or more differential channel quality information values. For any measurement time instant, the one or more differential channel quality information values at the measurement time instant include: differential channel quality information values obtained for channel quality information corresponding to other target reference signal resources transmitted at the measurement time instant relative to the greatest channel quality information at the measurement time instant, except for the target reference signal resource corresponding to the greatest channel quality information at the measurement time instant.

In some embodiments, the receiving module 903 is configured to receive indication information transmitted from the second node, where the indication information is used for determining a target transmission manner from a plurality of transmission manners for the channel state information. The processing module 901 is further configured to determine the target transmission manner based on the indication information.

In some embodiments, the processing module 901 is further configured to determine transmission overhead corresponding to each transmission manner in a plurality of transmission manners for the channel state information, and to select, from the plurality of transmission manners for the channel state information, a transmission manner with lowest transmission overhead as a target transmission manner. The transmitting module 902 is further configured to transmit an identity of the target transmission manner to the second node.

In some embodiments, the multiple reporting manners include at least a bitmap-based reporting manner and a non-bitmap-based reporting method.

In some embodiments, the receiving module 903 is further configured to receive first information transmitted from the second node. The first information is used for indicating a configuration parameter corresponding to the reference signal resource set, and the configuration parameter includes at least one of: a Transmission Configuration Indicator (TCI) status, Quasi-Co-Location (QCL) information, a power control parameter, a scrambling identity, a Partial Bandwidth (BWP) identity, or a resource type.

In some embodiments, the receiving module 903 is further configured to receive second information transmitted from the second node. The second information is used for configuring the first node to report channel quality information obtained by measurement under a same spatial relation or a same spatial reception parameter.

In some embodiments, the receiving module 903 is further configured to receive third information transmitted from the second node. The third information is used for configuring the first node to report channel quality information obtained by measurement under a same spatial relation or a same spatial reception parameter, and the spatial relation or the spatial reception parameter corresponds to greatest channel quality information in a measurement result.

In some embodiments, the receiving module 903 is further configured to receive fourth information transmitted from the second node. The fourth information is used for indicating the first node to report greatest channel quality information corresponding to each reference signal resource.

In some embodiments, the receiving module 903 is further configured to receive fifth information transmitted from the second node. The fifth information is used for indicating the first node to report channel quality information once for a same reference signal resource.

For a more detailed description of the above-mentioned processing module 901, transmitting module 902 and receiving module 903, as well as a more detailed description of each technical feature therein and a description of the beneficial effects, please refer to the corresponding method embodiment section above, which will not be repeated here.

FIG. 10 is a composition schematic diagram of a communication apparatus provided in the embodiments of the present disclosure, which is applied to the second node. As illustrated in FIG.10, the communication apparatus may include a transmitting module 1001 and a receiving module 1002.

In some embodiments, the transmitting module 1001 is configured to transmit reference signal resource(s) to the first node. The receiving module 1002 is configured to receive channel state information transmitted from the first node, where the channel state information includes a bitmap for indicating index information of target reference signal resource(s).

In some embodiments, the channel state information includes one bitmap, the bitmap includes M indicator bit(s), a value of M is equal to a number of reference signal resource(s) contained in a reference signal resource set, and M is a positive integer. Each indicator bit corresponds to one reference signal resource in the reference signal resource set, and the each indicator bit is used to indicate whether index information of the corresponding one reference signal resource is reported.

In some embodiments, the channel state information includes M bitmaps, each bitmap corresponds to one reference signal resource in the reference signal resource set, a value of M is equal to a number of reference signal resources contained in the reference signal resource set, and M is a positive integer. The each bitmap includes T indicator bits, a value of T is a number of measurement time instants, each indicator bit corresponds to one measurement time instant, and the each indicator bit is used to indicate whether index information of the reference signal resource corresponding to the bitmap at the corresponding one measurement time instant is reported.

In some embodiments, the channel state information includes one bitmap, the bitmap includes M*T indicator bits, a value of M is equal to a number of reference signal resource(s) contained in a reference signal resource set, M is a positive integer, and a value of T is a number of measurement time instants. Each indicator bit corresponds to one measurement time instant and to one reference signal resource in the reference signal resource set. The each indicator bit is used to indicate whether index information of a reference signal resource at the corresponding one measurement time instant is reported.

In some embodiments, the channel state information includes one bitmap, the bitmap includes M*T indicator bits, a value of M is equal to a number of reference signal resource(s) contained in a reference signal resource set, M is a positive integer, and a value of T is a number of measurement time instants. Each indicator bit corresponds to one measurement time instant and to one reference signal resource in the reference signal resource set. The each indicator bit is used to indicate whether index information of a reference signal resource at the corresponding one measurement time instant is reported.

In some embodiments, consecutive K indicator bits in the bitmap correspond to the same one measurement time instant; or consecutive P indicator bits correspond to the same one reference signal resource; a value of K is determined based on M, and a value of P is determined based on T.

In some embodiments, the channel state information further includes at least one of: the number of the target reference signal resource(s) transmitted at each measurement time instant; the number N of the target reference signal resource(s); channel quality information corresponding to each target reference signal resource; or an identity of a reference signal resource with greatest channel quality information.

In some embodiments, the identity of the reference signal resource with greatest channel quality information is used to identify the reference signal resource with the greatest channel quality information from the reference signal resource set. Alternatively, the identity of the reference signal resource with the greatest channel quality information is used to identify the reference signal resource with the greatest channel quality information from N target reference signal resource(s).

In some embodiments, the channel quality information includes at least one of the following: a reference signal received power (RSRP), a signal to interference plus noise ratio (SINR), a reference signal received quality (RSRQ), a channel quality indicator (CQI), a confidence parameter, or a probability parameter.

In some embodiments, the channel state information further includes: an absolute value of channel quality information corresponding to a first target reference signal resource, and differential channel quality information values of channel quality information corresponding to other respective target reference signal resources relative to the channel quality information corresponding to the first target reference signal resource.

In some embodiments, the channel state information further includes: an absolute value of greatest channel quality information at each measurement time instant and one or more differential channel quality information values. For any measurement time instant, the one or more differential channel quality information values at the measurement time instant include: differential channel quality information values obtained for channel quality information corresponding to other target reference signal resources transmitted at the measurement time instant relative to the greatest channel quality information at the measurement time instant, except for the target reference signal resource corresponding to the greatest channel quality information at the measurement time instant.

In some embodiments, the transmitting module 1001 is further configured to transmit indication information to the first node, where the indication information is used for determining a target transmission manner from a plurality of transmission manners for the channel state information.

In some embodiments, the receiving module 1002 is further configured to receive an identity of the target transmission manner transmitted from the first node, where the target transmission manner is one transmission manner in a plurality of transmission manners for the channel state information.

In some embodiments, the plurality of transmission manners at least includes a bitmap-based transmission manner and a non-bitmap-based transmission manner.

In some embodiments, the transmitting module 1001 is further configured to transmit first information to the first node. The first information is used for indicating a configuration parameter corresponding to the reference signal resource set, and the configuration parameter includes at least one of: a Transmission Configuration Indicator (TCI) status, Quasi-Co-Location (QCL) information, a power control parameter, a scrambling identity, a Partial Bandwidth (BWP) identity, or a resource type.

In some embodiments, the transmitting module 1001 is further configured to transmit second information to the first node. The second information is used for configuring the first node to report channel quality information obtained by measurement under a same spatial relation or a same spatial reception parameter.

In some embodiments, the transmitting module 1001 is further configured to transmit third information to the first node. The third information is used for configuring the first node to report channel quality information obtained by measurement under a same spatial relation or a same spatial reception parameter, and the spatial relation or the spatial reception parameter corresponds to greatest channel quality information in a measurement result.

In some embodiments, the transmitting module 1001 is further configured to transmit fourth information to the first node. The fourth information is used for indicating the first node to report greatest channel quality information corresponding to each reference signal resource.

In some embodiments, the transmitting module 1001 is further configured to transmit fifth information to the first node. The fifth information is used for indicating the first node to report channel quality information once for a same reference signal resource.

For a more detailed description of the above-mentioned transmitting module 1001 and receiving module 1002, as well as a more detailed description of each technical feature therein and a description of the beneficial effects, please refer to the corresponding method embodiment section above, which will not be repeated here.

It should be noted that the modules in FIG. 9 and FIG. 10 may also be referred to as units. In addition, in the embodiments illustrated in FIG. 9 and FIG. 10, the names of the modules may not be the same as those illustrated in the figures. For example, the transmitting module may also be referred to as the communication module, and the receiving module may also be referred to as the communication module.

If the respective units or modules in FIG. 9 and FIG. 10 are implemented in the form of a software functional module, and sold or used as an independent product, the respective units or modules may be stored in a computer readable storage medium. Based on this understanding, the technical solution of the embodiments of the present disclosure, essentially or as the part that contributes to the existing technology, or all or part of the technical solution, may be embodied in the form of a software product, and the computer software product is stored in a storage medium, and includes a plurality of instructions to cause a computer device (which may be a personal computer, a server, a network device, etc.) or processor to perform a part or all of the operations of the methods of various embodiments of the present disclosure. The storage medium for storing a computer software product includes various types of medium capable of storing program codes, such as a USB flash drive, a mobile disk, a Read-Only Memory (ROM), a Random-Access Memory (RAM), a magnetic disk, or an optical disk.

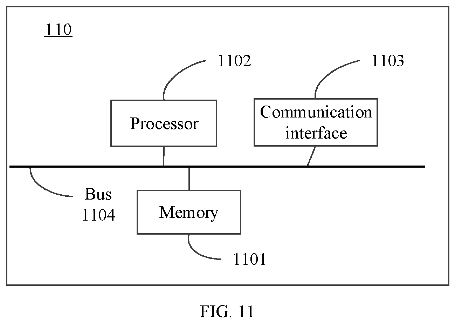

In a case where the functions of the above integrated modules are implemented in the form of hardware, the embodiments of the present disclosure provide a structural schematic diagram of a communication apparatus, the communication apparatus may be the above-mentioned communication apparatus 90 or communication apparatus 100. As illustrated in FIG. 11, the communication apparatus 110 includes a processor 1102, a communication interface 1103, and a bus 1104. In some embodiments of the present disclosure, the communication apparatus 110 may further include a memory 1101.

The processor 1102 may implement or execute various illustrative logical blocks, modules and circuits described in combination with the contents of the present disclosure. The processor 1102 may be a central processing unit, a general-purpose processor, a digital signal processor, an application-specific integrated circuit, a field-programmable gate array, or other programmable logic devices, transistor logic devices, hardware components, or any combination thereof, and may implement or perform various exemplary logic blocks, modules, and circuits described in conjunction with the embodiment contents of the present disclosure. The processor 1102 may also be a combination for implementing computing functions. For example, the processor 1102 may include a combination of one or more microprocessors, or a combination of a DSP and a microprocessor.

The communication interface 1103 is configured to connect with other devices via a communication network. The communication network may be an Ethernet, a radio access network, a Wireless Local Area Network (WLAN), or the like.

The memory 1101 may be, but is not limited to, a Read-Only Memory (ROM) or a static storage device of any other type capable of storing static information and instructions, a Random Access Memory (RAM) or a dynamic storage device of any other type capable of storing information and instructions, or an Electrically Erasable Programmable Read-Only Memory (EEPROM), a magnetic disk storage medium or any other magnetic disk storage device, or any other medium capable of being used to carry or store desired program codes and capable of being accessed by a computer, where the desired program codes have instructions or are in the form of data structure.

As a possible implementation, the memory 1101 may exist independently of the processor 1102, and the memory 1101 may be connected to the processor 1102 through the bus 1104, and is used for storing instructions or program codes. When the processor 1102 invokes and executes the instructions or program codes stored in the memory 1101, the processor 1302 may implement the methods provided in the embodiments of the present disclosure.

In another possible implementation, the memory 1101 may also be integrated with the processor 1102.

The bus 1104 may be an Extended Industry Standard Architecture (EISA) bus, or the like. The bus 1104 may be classified as an address bus, a data bus, a control bus, and the like. For ease of representation, only one bold line is used in FIG. 11 for representing the bus 1104, which however does not mean that there is only one bus or one type of bus.

From description of the above embodiments, those skilled in the art will clearly understand that, for convenience and brevity of description, an example is only given according to the above division of functional modules. In practical applications, the above functions are allocated to different functional modules as needed. That is, an internal structure of the device or apparatus is divided into different functional modules to perform all or part of the functions described above.

Embodiments of the present disclosure further provide a computer-readable storage medium (including a non-transitory computer-readable storage medium). All or part of the processes in the above method embodiments can be executed by computer instructions instructing related hardware. The computer instructions can be stored in the above computer-readable storage medium. When the computer instructions are executed, the processes of the above method embodiments can be included. The computer readable storage medium may be an internal storage unit or a memory of any one of the aforementioned embodiments. The computer-readable storage medium may also be an external storage device of the above device or apparatus, such as a plug-in hard disk, a smart media card (SMC), a secure digital (SD) card, a flash card, etc., equipped on the above device or apparatus. Furthermore, the above-mentioned computer readable storage medium may include both an internal storage unit and an external storage device of the above device or apparatus. The above-mentioned computer readable storage medium is used to store the above-mentioned computer program and other programs and data required for the above device or apparatus. The above-mentioned computer readable storage medium may also be used to temporarily store data that has been output or is to be output.

Embodiments of the present disclosure further provide a computer program product. The computer program product includes computer programs that, when run on a computer, enable the computer to execute any one of the methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, the word "comprise/comprises/comprising" does not exclude other components or steps, and "a/an" or "one" does not exclude multiple cases. A single processor or other units may implement couples of functions listed in the claims. Some measures are recorded in different dependent claims, but this does not mean that these measures cannot be combined to produce good results.

Although the present disclosure is described in conjunction with some features and embodiments thereof, it is apparent that various modifications and combinations may be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above-mentioned description is only the specific implementation of the present disclosure, but the scope of protection of the present disclosure is not limited thereto. Any variation or substitution within the scope of the technologies disclosed in the present disclosure shall be covered by the scope of protection of the present disclosure. Therefore, the scope of protection of the present disclosure should be subject to the scope of protection of the claims.

## Claims

1. A channel state information transmitting method, applied to a first node, comprising:
obtaining channel state information based on measurement of reference signal resource(s) transmitted from a second node; and
transmitting the channel state information to the second node, wherein the channel state information comprises a bitmap for indicating index information of target reference signal resource(s).

2. The method of claim 1, wherein the channel state information comprises one bitmap, the bitmap comprises M indicator bit(s), a value of M is equal to a number of reference signal resource(s) contained in a reference signal resource set, and M is a positive integer; each indicator bit in the M indicator bit(s) corresponds to one reference signal resource in the reference signal resource set, and the each indicator bit is used to indicate whether index information of the corresponding one reference signal resource is reported.

3. The method of claim 1, wherein the channel state information comprises T bitmaps, each bitmap in the T bitmaps corresponds to one measurement time instant, and a value of T is a number of measurement time instants; the each bitmap comprises M indicator bit(s), a value of M is equal to a number of reference signal resource(s) contained in a reference signal resource set, and M is a positive integer; each indicator bit in the M indicator bit(s) of each bitmap corresponds to one reference signal resource in the reference signal resource set, and the each indicator bit in the each bitmap is used to indicate whether index information of the corresponding one reference signal resource is reported.

4. The method of claim 1, wherein the channel state information comprises M bitmaps, each bitmap in the M bitmaps corresponds to one reference signal resource in the reference signal resource set, a value of M is equal to a number of reference signal resources contained in the reference signal resource set, and M is a positive integer; the each bitmap comprises T indicator bits, a value of T is a number of measurement time instants, each indicator bit in the T indicator bits corresponds to one measurement time instant, and the each indicator bit is used to indicate whether index information of a reference signal resource of the corresponding one bitmap and the corresponding one measurement time instant is reported.

5. The method of claim 1, wherein the channel state information comprises one bitmap, the bitmap comprises M*T indicator bits, a value of M is equal to a number of reference signal resource(s) contained in a reference signal resource set, M is a positive integer, and a value of T is a number of measurement time instants; each indicator bit in the M*T indicator bits corresponds to one measurement time instant and to one reference signal resource in the reference signal resource set; the each indicator bit is used to indicate whether index information of a reference signal resource at the corresponding one measurement time instant is reported.

6. The method of claim 5, wherein consecutive K indicator bits in the bitmap correspond to a same one measurement time instant; or consecutive P indicator bits correspond to a same one reference signal resource; and wherein a value of K is determined based on M, and a value of P is determined based on T.

7. The method of any one of claims 2 to 5, wherein the channel state information further comprises at least one of:
a number of target reference signal resource(s) transmitted at each measurement time instant;
a number N of target reference signal resource(s), wherein N is a positive integer;
channel quality information corresponding to each target reference signal resource; or
an identity of a reference signal resource with greatest channel quality information.

8. The method of claim 7, wherein the identity of the reference signal resource with the greatest channel quality information is used to identify the reference signal resource with the greatest channel quality information from the reference signal resource set; or
the identity of the reference signal resource with the greatest channel quality information is used to identify the reference signal resource with the greatest channel quality information from the N target reference signal resource(s).

9. The method of claim 7, wherein the channel quality information comprises at least one of: Reference Signal Received Power (RSRP), Signal to Interference plus Noise Ratio (SINR), Reference Signal Received Quality (RSRQ), Channel Quality Indicator (CQI), a confidence parameter, or a probability parameter.

10. The method of claim 1, wherein the channel state information further comprises: an absolute value of channel quality information corresponding to a first target reference signal resource, and differential channel quality information values of channel quality information corresponding to other respective target reference signal resources relative to the channel quality information corresponding to the first target reference signal resource.

11. The method of claim 1, wherein the channel state information further comprises: an absolute value of greatest channel quality information at each measurement time instant and one or more differential channel quality information values; for any measurement time instant, the one or more differential channel quality information values at the any measurement time instant include: differential channel quality information values obtained for channel quality information corresponding to other target reference signal resources transmitted at the any measurement time instant relative to the greatest channel quality information at the any measurement time instant, except for the target reference signal resource corresponding to the greatest channel quality information at the any measurement time instant.

12. The method of claim 1, further comprising:
receiving indication information transmitted from the second node, wherein the indication information is used for determining a target transmission manner from a plurality of transmission manners for the channel state information; and
determining the target transmission manner based on the indication information.

13. The method of claim 1, further comprising:
determining transmission overhead corresponding to each transmission manner in a plurality of transmission manners for the channel state information;
selecting, from the plurality of transmission manners for the channel state information, a transmission manner with lowest transmission overhead as a target transmission manner; and
transmitting an identity of the target transmission manner to the second node.

14. The method of claim 12 or 13, wherein the plurality of transmission manners at least comprises a bitmap-based transmission manner and a non-bitmap-based transmission manner.

15. The method of claim 1, further comprising:
receiving first information transmitted from the second node, wherein the first information is used for indicating a configuration parameter corresponding to the reference signal resource set, and the configuration parameter comprises at least one of: a Transmission Configuration Indicator (TCI) status, Quasi-Co-Location (QCL) information, a power control parameter, a scrambling identity, a Partial Bandwidth (BWP) identity, or a resource type.

16. The method of claim 1, further comprising:
receiving second information transmitted from the second node, wherein the second information is used for configuring the first node to report channel quality information obtained by measurement under a same spatial relation or a same spatial reception parameter.

17. The method of claim 1, further comprising:
receiving third information transmitted from the second node, wherein the third information is used for configuring the first node to report channel quality information obtained by measurement under a same spatial relation or a same spatial reception parameter, and the spatial relation or the spatial reception parameter corresponds to greatest channel quality information in a measurement result.

18. The method of claim 1, further comprising:
receiving fourth information transmitted from the second node, wherein the fourth information is used for indicating the first node to report greatest channel quality information corresponding to each reference signal resource.

19. The method of claim 1, further comprising:
receiving fifth information transmitted from the second node, wherein the fifth information is used for indicating the first node to report channel quality information once for a same reference signal resource.

20. A channel state information receiving method, applied to a second node, comprising:
transmitting reference signal resource(s) to a first node; and
receiving channel state information transmitted from the first node, wherein the channel state information comprises a bitmap for indicating index information of target reference signal resource(s).

21. The method of claim 20, wherein the channel state information comprises one bitmap, the bitmap comprises M indicator bit(s), a value of M is equal to a number of reference signal resource(s) contained in a reference signal resource set, and M is a positive integer; each indicator bit in the M indicator bit(s) corresponds to one reference signal resource in the reference signal resource set, and the each indicator bit is used to indicate whether index information of the corresponding one reference signal resource is reported.

22. The method of claim 20, wherein the channel state information comprises M bitmaps, each bitmap in the M bitmaps corresponds to one reference signal resource in the reference signal resource set, a value of M is equal to a number of reference signal resources contained in the reference signal resource set, and M is a positive integer; the each bitmap comprises T indicator bits, a value of T is a number of measurement time instants, each indicator bit in the T indicator bits corresponds to one measurement time instant, and the each indicator bit is used to indicate whether index information of a reference signal resource of the corresponding one bitmap and the corresponding one measurement time instant is reported.

23. The method of claim 20, wherein the channel state information comprises one bitmap, the bitmap comprises M*T indicator bits, a value of M is equal to a number of reference signal resource(s) contained in a reference signal resource set, M is a positive integer, and a value of T is a number of measurement time instants; each indicator bit corresponds to one measurement time instant and to one reference signal resource in the reference signal resource set; the indicator bit is used to indicate whether index information of a reference signal resource at the corresponding one measurement time instant is reported.

24. The method of claim 20, wherein the channel state information comprises one bitmap, the bitmap comprises M*T indicator bits, a value of M is equal to a number of reference signal resource(s) contained in a reference signal resource set, M is a positive integer, and a value of T is a number of measurement time instants; each indicator bit corresponds to one measurement time instant and to one reference signal resource in the reference signal resource set; the indicator bit is used to indicate whether index information of a reference signal resource of the corresponding one measurement time instant is reported.

25. The method of claim 24, wherein consecutive K indicator bits in the bitmap correspond to a same one measurement time instant; or consecutive P indicator bits correspond to a same one reference signal resource; and wherein a value of K is determined based on M, and a value of P is determined based on T.

26. The method of any one of claims 21 to 24, wherein the channel state information further comprises at least one of:
a number of target reference signal resource(s) transmitted at each measurement time instant;
a number N of the reference signal resource(s);
channel quality information corresponding to each target reference signal resource; or
an identity of a reference signal resource with greatest channel quality information.

27. The method of claim 26, wherein the identity of the reference signal resource with the greatest channel quality information is used to identify the reference signal resource with the greatest channel quality information from the reference signal resource set; or
the identity of the reference signal resource with the greatest channel quality information is used to identify the reference signal resource with the greatest channel quality information from the N target reference signal resource(s).

28. The method of claim 26, wherein the channel quality information comprises at least one of: Reference Signal Received Power (RSRP), Signal to Interference plus Noise Ratio (SINR), Reference Signal Received Quality (RSRQ), Channel Quality Indicator (CQI), a confidence parameter, or a probability parameter.

29. The method of claim 20, wherein the channel state information further comprises: an absolute value of channel quality information corresponding to a first target reference signal resource, and differential channel quality information values of channel quality information corresponding to other respective target reference signal resources relative to the channel quality information corresponding to the first target reference signal resource.

30. The method of claim 20, wherein the channel state information further comprises: an absolute value of greatest channel quality information at each measurement time instant and one or more differential channel quality information values; for any measurement time instant, the one or more differential channel quality information values at the any measurement time instant include: differential channel quality information values obtained for channel quality information corresponding to other target reference signal resources transmitted at the any measurement time instant relative to the greatest channel quality information at the any measurement time instant, except for the target reference signal resource corresponding to the greatest channel quality information at the any measurement time instant.

31. The method of claim 20, further comprising:
transmitting indication information to the first node, wherein the indication information is used for determining a target transmission manner from a plurality of transmission manners for the channel state information.

32. The method of claim 20, further comprising:
receiving an identity of the target transmission manner transmitted from the first node, wherein the target transmission manner is one transmission manner in a plurality of transmission manners for the channel state information.

33. The method of claim 31 or 32, wherein the plurality of transmission manners at least comprises a bitmap-based transmission manner and a non-bitmap-based transmission manner.

34. The method of claim 20, further comprising:
transmitting first information to the first node, wherein the first information is used for configuring a configuration parameter corresponding to the reference signal resource set, and the configuration parameter comprises at least one of: a Transmission Configuration Indicator (TCI) status, Quasi-Co-Location (QCL) information, a power control parameter, a scrambling identity, a Partial Bandwidth (BWP) identity, or a resource type.

35. The method of claim 20, further comprising:
transmitting second information to the first node, wherein the second information is used for configuring the first node to report channel quality information obtained by measurement under a same spatial relation or a same spatial reception parameter.

36. The method of claim 20, further comprising:
transmitting third information to the first node, wherein the third information is used for configuring the first node to report channel quality information obtained by measurement under a same spatial relation or a same spatial reception parameter, and the spatial relation or the spatial reception parameter corresponds to greatest channel quality information in a measurement result.

37. The method of claim 20, further comprising:
transmitting fourth information to the first node, wherein the fourth information is used for indicating the first node to report greatest channel quality information corresponding to each reference signal resource.

38. The method of claim 20, further comprising:
transmitting fifth information to the first node, wherein the fifth information is used for indicating the first node to report channel quality information once for a same reference signal resource.

39. A communication apparatus, comprising a memory and a processor; wherein the memory and the processor are coupled; the memory is configured to store instructions executable by the processor; and the processor, when executing the instructions, is configured to perform the method according to any one of claims 1 to 38.

40. A computer readable storage medium, wherein the computer readable storage medium has stored computer instructions thereon, and the computer instructions, when executed on a communication apparatus, cause the communication apparatus to perform the method according to any one of claims 1 to 38.
